# EUROPEAN PATENT APPLICATION

(11) **EP 4 083 894 A1**
(43) Date of publication of application: **02.11.2022**
(21) Application number: 22153022.3
(22) Date of filing: 24.01.2022
(51) Int. Cl.: G06Q 30/06, G06F 8/60

(54) **SYSTEMS AND METHODS FOR AUTOMATICALLY CUSTOMIZING RESOURCES FOR THIRD PARTIES**

(30) Priority: 27.04.2021 US 202117242081
(71) Applicant: eBay, Inc., San Jose, CA 95125 (US)
(72) Inventor: TIPNIS, Madhura Pravin, San Jose, 95125 (US); JANAWADE, Prashant, San Jose, 95125 (US); KIM, Minji, San Jose, 95125 (US); TSOW, Raphael Philip Tsing Tseuk, San Jose, 95125 (US); MOHIT, Anil, San Jose, 95125 (US)
(74) Representative: Murgitroyd & Company

(57) **Abstract**

A resource provider is disclosed which, upon receiving selection of a resource from a first party for delivery to a third party, automatically determines configuration and/or customization settings for the specific resource based upon the third-party user's target device and/or their preferred customizations. In doing so, the first party does not need to have specific knowledge about the third party in order to correctly configure or customize the resource for use by the third party. Upon receiving a selection of a resource, the resource provider determines configurable and customizable features for the selected resource.

## Description

### BACKGROUND

As an increasing number of services are performed online and remote work becomes increasingly more commonplace, delegation tasks performed on behalf of a remote party becomes more commonplace. One commonly delegated task is the provisioning of a resource to a third party. Often, resources can be configured specifically to a user preference. However, the delegate performing the provisioning often does not know the third party's preferences and therefore cannot correctly configure the resource on behalf of the third party.

It is with respect to these and other general considerations that the aspects disclosed herein have been made. Although relatively specific problems may be discussed, it should be understood that the examples should not be limited to solving the specific problems identified in the background or elsewhere in this disclosure.

### SUMMARY

The present invention provides a system, method and computer-readable medium, as defined in the appended claims.

A resource provider is disclosed which, upon receiving selection of a resource from a first party for delivery to a third party, automatically determines configuration and/or customization settings for the specific resource based upon the third party user's target device and/or their preferred customizations. In doing so, the first party does not need to have specific knowledge about the third party in order to correctly configure or customize the resource for use by the third party. Upon receiving a selection of a resource, the resource provider determines configurable and customizable features for the selected resource.

This Summary is provided to introduce a selection of concepts in a simplified form, which is further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the following description and, in part, will be apparent from the description, or may be learned by practice of the disclosure.

### BRIEF DESCRIPTIONS OF THE DRAWINGS

Non-limiting and non-exhaustive examples are described with reference to the following figures.
FIG. 1 illustrates and exemplary system for automatically retrieving resources selected by a first party and customizing the resources for delivery to a third party.
FIG. 2 is a block diagram illustrating the exemplary components of a resource provider.
FIG. 3 illustrates an exemplary method for generating a request for a customizable resource on behalf of a different user.
FIG. 4 illustrates an exemplary method for automatically customizing a resource.
FIG. 5 depicts an exemplary method for automatically determining customizable features of a resource is presented.
FIG. 6 provides an exemplary method of a practical application of the automatic configuration aspects disclosed herein to an electronic marketplace.
FIG. 7 is a block diagram illustrating example physical components of a computing device with which aspects of the disclosure may be practiced.

### DETAILED DESCRIPTION

Various aspects of the disclosure are described more fully below with reference to the accompanying drawings, which from a part hereof, and which show specific example aspects. However, different aspects of the disclosure may be implemented in many different ways and should not be construed as limited to the aspects set forth herein; rather, these aspects are provided so that this disclosure will be thorough and complete, and will fully convey the scope of the aspects to those skilled in the art. Aspects may be practiced as methods, systems, or devices. Accordingly, aspects may take the form of a hardware implementation, an entirely software implementation or an implementation combining software and hardware aspects. The following detailed description is, therefore, not to be taken in a limiting sense.

Aspects of the present disclosure relate to systems and methods for automatically determining configuration or customization features for resources intended for a third party. As an increasing number of services are performed online and remote work becomes increasingly more commonplace, delegation tasks performed on behalf of a remote party becomes more commonplace. Take, for example, the increasing number of employees who work remotely combined with the increasing number of companies that have implemented bring-your-own-device (BYOD) policies for their workforce. Where once an IT professional for an enterprise had to deploy applications over a mostly standard set of hardware devices, these professionals now work in an environment that supports a variety of different hardware specifications and operating systems. Continuing the example, some employees may not be sophisticated enough to know hardware/software characteristics of their devices. Thus, a tool to help an IT professional deploy the ac correctly configured and/or customized resource (e.g., application, library, etc.) to an employee.

A resource provider is disclosed which, upon receiving selection of a resource from a first party for delivery to a third party, automatically determines configuration and/or customization settings for the specific resource based upon the third-party user's target device and/or their preferred customizations. In doing so, the first party does not need to have specific knowledge about the third party in order to correctly configure or customize the resource for use by the third party. Upon receiving a selection of a resource, the resource provider determines configurable and customizable features for the selected resource. In one aspect, the resource provider determines characteristics about the target device and/or user who is the intended recipient of the resource. The determination may be based upon past delivery or purchase history of the target device and/or target user. Alternatively, or additionally, the resource provider may automatically generate a query asking for configuration and or customization settings for the user.

Among other benefits, the resource provider provides the benefits of reducing network traffic by reducing back and forth contact between a first party and third party, increases the efficiency of a party delivering resources by ensuring the resources are correctly configured for the intended recipient, thereby reducing the likelihood that a resource would need to be redeployed, allows the recipient of the resource to immediately use the resource without having to manually configure the resource, reduces the likelihood that a resource will be returned by the user, thereby saving network resources and, in instances where the resource is a physical object, reduces delivery costs, etc.

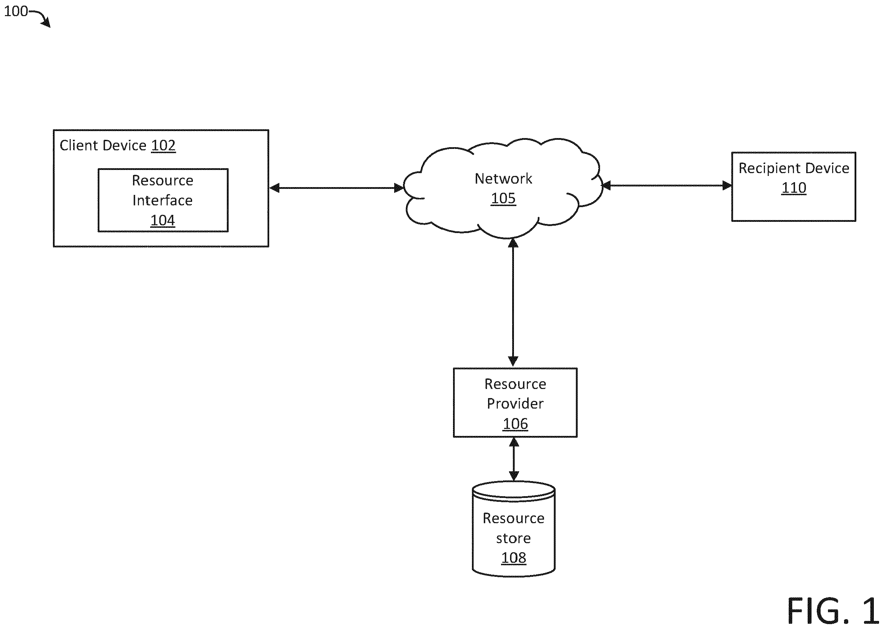

FIG. 1 illustrates and exemplary system 100 for automatically retrieving resources selected by a first party and customizing the resources for delivery to a third party. As shown in FIG. 1, a client device 102 communicates with a resource provider 106 via a network 104. In examples, client device 102 may be associated with a first user who is selecting one or more resources intended to be used by a third party. Client device 102 may be any type of computing device including, but not limited to, a personal computer, a laptop, a smartphone, a tablet, a server computer, or the like. Client device 102 communicates with the resource provider 106 via resource interface 104. Resource interface 104 is an application or tool operable to receive queries for resources from the first user and submit the queries to resource provider 106. In one example, resource interface 104 may be a browser that connects to the resource provider 106 via the Internet. In alternate examples, resource 104 may be a mobile application, an interface to a code repository, or any other type of application operable to submit queries for resources and provide the query results to a user in a manner that allows the user to select and/or modify one or more resources.

Upon receiving a query for a resource, client device 102 submits the query resource provider 106 via resource interface 104. In response to receiving the query, resource provider 106 queries resource store 108 to generate a list of resources matching the received query. The list of resources is provided to client device 102. In response to receiving a selection of a particular resource from client device 102, resource provider 106 determines whether the selected resource includes customizable resources. When a selected resource is customizable, resource provider 106 may notify client device 102 that the resource is customizable and/or configurable and request configuration settings for the selected resource from client device 102. However, as previously discussed, client device 102 may be selecting a resource intended for use by second user, such as a user associated with recipient device 110. As such, the selected resource may be configured according to the operating environment of the recipient device 110 and/or the second user's preferences. Often, client device 102 is not able to provide the specific customization information. For example, in a company with a bring-your-own-devicepolicy (BYOD), an IT administrator selecting applications for delivery to a user may not know all the details about the user's device and/or the user's preferences.

Client device 102 may be operable to transmit a subset of known customization or configuration settings to resource provider 106 along with an identifier for the target device and/or user receiving the resource. In examples, the identifier may be an IP address for recipient device 110, an email address associated with the second user, an account identifier associated with the second user, or other identifying information for the second user (e.g., a phone number, an address, etc.). Upon receiving the subset of known customization or configuration settings, resource provider 106 determines which customization and/or configuration settings are still required. Upon identifying the missing settings, resource provider 106 automatically determines the missing settings on behalf of the client device 102. For example, resource provider 106 may have previously provided resources to recipient device 110 and/or the second user. In such examples, the resource provider 106 may access a device profile for recipient device and/or a user profile associated with the second maintained by the resource provider 106 to determine the remaining customization or configuration settings. If the resource provider 106 does not have a device and/or user profile for the intended recipient, or if the resource provider's 106 device/user profile does not contain information related to the customizable features for the selected resource, resource provider 106 may automatically query recipient device 110 for information used to complete the remaining customization or configuration settings. Upon receiving the information, resource provider 106 customizes the resource and delivers the resource to the recipient. Continuing the BYOD example, upon receiving information related to configuration settings (e.g., device hardware specifications, operating system, supported APIs, libraries, etc.) and/or user specific customization settings, the resource provider may automatically configure the application based upon the received information and provide the configured application to the recipient device 110.

Although not shown in FIG. 1, resource provider 106 may be operable to interact with any number of client devices 102 to process requests for delivery to any number of recipient devices 110. In certain aspects, resource provider 106 may be an application library, an apps store, a source code repository, an SDK, or the like. In alternate aspects, the resource provider may be an electronic marketplace offering goods or services for delivery. Although specific examples of the resource provider have been described herein, one of skill in the art will appreciate that other types of resource providers 106, client devices 102, and recipient devices 110 are contemplated within the scope of this disclosure.

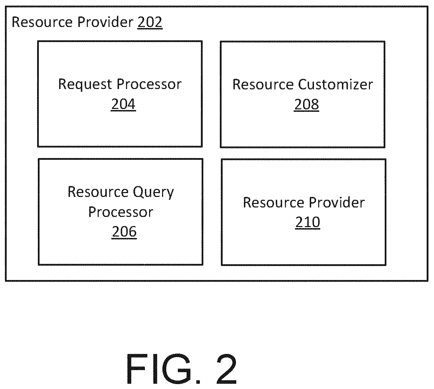

FIG. 2 is a block diagram illustrating the exemplary components of a resource provider 202. Resource provider 202 may include a request processor 204. In examples, the request processor 204 is operable to receive a query for resources from a client device and communicate a listing of one or more resources to the client device in response to receiving the query. Request processor 204 may be operable to generate a user interface operable to receive the query. The request processor 204 may display the user interface or cause a second device to display the user interface. For example, request processor 204 may generate an interface operable to receive a query for resources, such as a text box operable to receive search parameters. The interface may further be operable to generate and display categories of resources offered by the request provider which, when selected, allow a user to browse resources for delivery to another device or user. In further aspects, the request processor 204 may be operable to receive a selection of one or more resources from a client device. Upon receiving the selection, request processor 204 generates a user interface indicating one or more customizable features for the selected resource(s). Request processor 204 may be further operable to receive configuration or customization settings for the customizable features from a client device associated with the user.

Resource query processor 206 may communicate with request processor 204. In examples, resource query processor 206 processes resource queries received from the request processor 204. For example, resource query processor 206 may be operable to query a resource store, such as resource store 108 from FIG. 1, to identify resources that match or are related to the received query parameters. Resource query processor 206 may return a list of one or more matching resource to request processor 204 for delivery to a requesting client. In further examples, resource query processor 206 may be operable to identify customizable features of the one or more resources based upon analysis of metadata associated with the one or more resources.

Upon receiving selection of a resource, resource customizer 208 may automatically determine configuration and/or customization settings for the customizable features of the selected resource. In one example, resource customizer 208 may receive the identity of the resource target. The identity of the resource target is used to identify the device and/or user who ultimately receives the resource. In examples, the identifier may be an IP address for recipient device 110, an email address associated with the second user, an account identifier associated with the second user, or other identifying information for the second user (e.g., a phone number, an address, etc.). Once the target device and/or target user has been identified, the resource customizer 206 may query known information about the target device and/or user. In one example, the target device and/or user may have previously received a resource from resource provider 202. In such examples, the resource provider 202 may have stored device settings, user profile information, and/or previously selected customizations associated with the target device and/or user that can be used to set or otherwise configure the customizable features of the selected resource. In some examples, resource customizer 208 may access the stored device settings, user profile information, and/or previously selected customizations and use the stored information to set the configurable or customizable features of the selected resource.

In some examples, resource provider 208 may not have stored data related to the target device and/or user or, alternatively, the stored data may not contain information needed to for the particular customizable features of the selected resource. In such instances, the resource customizer may automatically generate and send a query to the target device for one or more specific customizable features. In one example, the query may request device specific information from the target device. Alternatively, the query may be intended for the target user. In such instances, the query may take the form of an email or other electronic communication directed towards the target user that prompts the user to provide a selection of the unknown customizable features. In some aspects, even if resource customizer 208 can access previously stored data related to the customizable features of the selected resource, resource customizer 208 may still automatically generate a query to the target device and/or target user asking them to confirm the customizable features. This allows resource customizer 208 to capture any changes in operating environment, hardware features, or user preferences that may have occurred since the last time the resource provider provisioned the resource for the target device and/or user. In certain aspects, the confirmation communication may always be performed prior to provisioning the customized resource. Alternatively, the confirmation may be triggered based upon passage of a predetermined amount of time since the resource provider 202 last provisioned a resource for the target device and/or user.

In some aspects, in addition determining configuration and/or customization settings, resource customizer 208 may apply the configuration and/or customization settings to the selected resource. Alternatively, the actually configuration of the settings may be performed by resource provider 210. Once the selected resource has been properly configured and/or customized, resource provider 210 may deliver the resource to the target device and/or user. In examples where the selected resource is an electronic resource, providing the resource includes sending the resource to the target device via a network, such as over the Internet or an enterprise intranet. In alternate aspects, the resource may be a physical article. In such cases, resource provider may issue an order to deliver the configured and customized physical article to the intended recipient. Although FIG. 2 depicts exemplary components of resource provider 202 performing specific actions, one of skill in the art will appreciate that resource provider may incorporate fewer or more components than those depicted in Figure 2. Further, the disclosed operations may be performed by alternate components, or a combination of components disclosed herein without departing for the spirit of this disclosure.

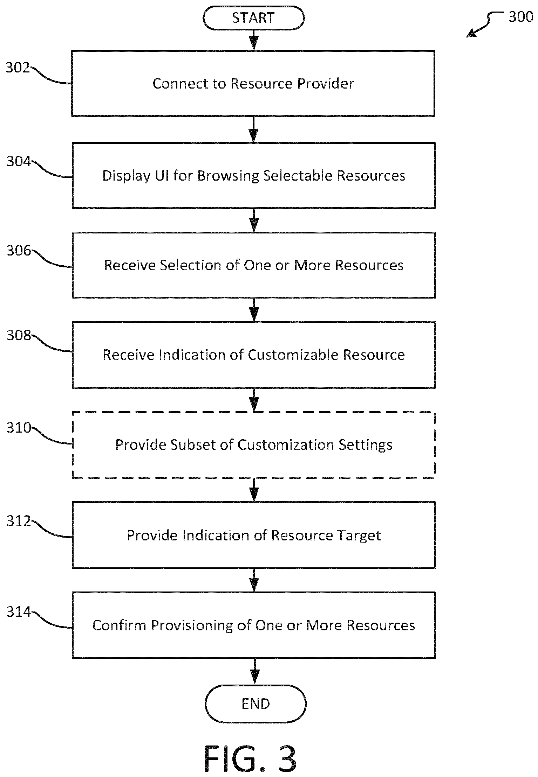

FIG. 3 illustrates an exemplary method 300 for generating a request for a customizable resource on behalf of a different user. In one example, the method 300 may be performed by a client device associated with a first user who is not the intended recipient of the resource. A general order of the operations for the method 300 is shown in FIG. 3. The method 300 may include more or fewer steps or may arrange the order of the steps differently than those shown in FIG. 3. The method 300 can be executed as a set of computer-executable instructions executed by a computer system and encoded or stored on a computer readable medium. Further, the method 300 can be performed by gates or circuits associated with a processor, an ASIC, an FPGA, a SOC or other hardware device. Hereinafter, the method 300 shall be explained with reference to the systems, components, devices, modules, software, data structures, data characteristic representations, signalling diagrams, methods, etc., described in conjunction with FIGS. 1, 2, 4, 5, 6 and 7.

Method 300 begins at operation 302 where the device connects to a resource provider. In one example, the device may receive an address associated with the resource provider. For example, the device may receive a URL for the resource provider. Upon connecting to the resource provider, flow continues to operation 304 where a user interface (UI) for browsing selectable resources from the resource provider is displayed. In example, the UI may include one or more interface components operable to receive a query for resources, such as a text box operable to receive search parameters. The UI may be operable to display a list of resources identified by the received search parameters. Alternatively, or additionally, the interface may include components related to categories of resources offered by the request provider, which, when selected, display a listing of resources associated with the selected category.

Upon displaying a listing of resources, flow continues to operation 306 where a selection of the one or more resources is received. Upon receiving the selection, an indication of the one or more selected resources to the resource provider. In response to sending the indication, flow continues to operation 308 where an indication of customizable features for the one or more selectable features is received from the resource provider. The different customizable features may be displayed to the user at operation 308. The customizable features may be dependent upon the resource type and may differ based upon the individual selected resources. For example, customizations may relate to the type of operating system or application intended to use the resource, specific hardware characteristics of the target device, available libraries resident on the target device, application setting preferred by the intended user, etc.. Alternatively, the selected resource may be a physical product. In such instances, customizable features may relate to a size, color, configuration, brand, materials, etc. Once of skill in the art will appreciate that the disclosed systems and methods are not limited by the type of resource and or customization features associated with the resource. Rather, the systems and methods disclosed herein may be practice with any type of resource having any number or type of different configurable features.

As previously discussed, aspects of the present disclosure provide a tool which allows a user to select a resource intended for another user or on behalf of the intended user. As such, the user selecting the resource may be unfamiliar with the hardware environment of device that ultimately receives the resource or the customization preferences of the user who will ultimately use the resource, clothing or shoe size, color preference, shape, brand preference, material, etc. However, some of the customizable features may be known to the user selecting the resource. At optional operation 310, the method 300 may receive a subset of configuration or customization data related to the customizable features for the selected resource. The subset of configuration or customization data is then provided to the resource provider for use in resource configuration.

At operation 312, an indication of the target device and/or user of the resource is provided. The indication is one or more identifiers that allows the resource provider to identify and/or contact the target device in order to complete the automatic customization of the resource. In examples, the identifier may be an IP address for recipient device 110, an email address associated with the second user, an account identifier associated with the second user, or other identifying information for the second user (e.g., a phone number, an address, etc.). Upon identifying the resource target, flow continued to operation 314 where a confirmation is provided. The confirmation indicates that the resource provider should provision and provide the selected resource to the target device and or recipient. In one example, the confirmation may include a checkout or purchase process of the intended resource.

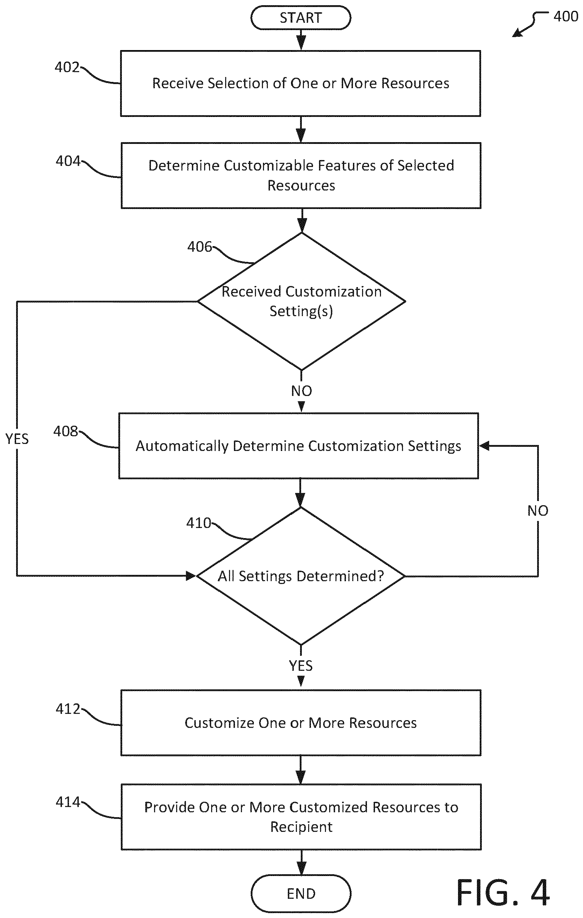

FIG. 4 illustrates an exemplary method 400 for automatically customizing a resource. In one example, the method 400 may be performed by a resource provider. A general order of the operations for the method 400 is shown in FIG. 4. The method 400 may include more or fewer steps or may arrange the order of the steps differently than those shown in FIG. 4. The method 400 can be executed as a set of computer-executable instructions executed by a computer system and encoded or stored on a computer readable medium. Further, the method 400 can be performed by gates or circuits associated with a processor, an ASIC, an FPGA, a SOC or other hardware device. Hereinafter, the method 300 shall be explained with reference to the systems, components, devices, modules, software, data structures, data characteristic representations, signalling diagrams, methods, etc., described in conjunction with FIGS. 1, 2, 3, 5, 6 and 7.

Flow begins at operation 402 where a selection of one or more resources is received. The selection identifies one or more resources that are to be sent to a target device or target user other than the device or user who selected the resource. At operation 404, one or more configurable or customizable features are identified for the one or more selected resources. In aspects, the configurable or customizable features may be determined by analyzing metadata for the selected resources that identifies configurable or customizable features of the resources. The metadata may also indicate whether a particular configurable or customizable feature is required or optional. If the feature is required, the device performing the method 400 must determine the feature before the resource can be provided. If the feature is optional, the resource may still be provided to the target device or user even if the feature cannot be determined through performance of the method 400.

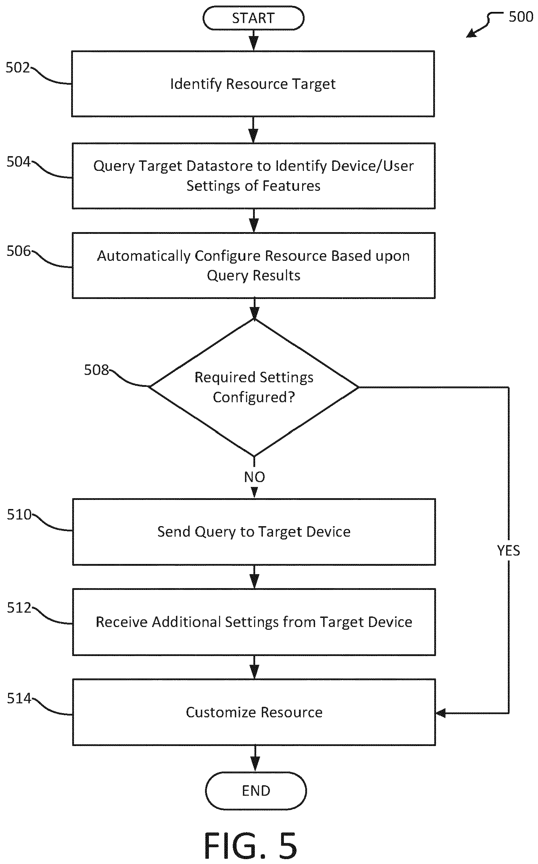

At decision operation 406, a determination is made as to whether any configuration settings and/or customization settings were received in addition to the selection of the resources. As previously discussed, some of the customizable features may be known to the device or user selecting the resource. Known settings may be received and used for configuration. If settings are received, flow branches YES to operation 410 discussed in further detail below. If settings are not received, however, flow branches NO to operation 408. At operation 408, settings for the configurable or customizable features of the selected resources are automatically determined. The process for automatically determining the settings for the configurable or customizable features is described in detail with respect to FIG. 5.

Turning now to FIG. 5, an exemplary method 500 for automatically determining customizable features of a resource is presented. In one example, the method 500 may be performed by a resource provider. A general order of the operations for the method 500 is shown in FIG. 5. The method 500 may include more or fewer steps or may arrange the order of the steps differently than those shown in FIG. 5. The method 500 can be executed as a set of computer-executable instructions executed by a computer system and encoded or stored on a computer readable medium. Further, the method 500 can be performed by gates or circuits associated with a processor, an ASIC, an FPGA, a SOC or other hardware device. Hereinafter, the method 300 shall be explained with reference to the systems, components, devices, modules, software, data structures, data characteristic representations, signalling diagrams, methods, etc., described in conjunction with FIGS. 1, 2, 3, 4, 6 and 7.

Flow begins at operation 502 where a resource target is identified. The resource target may be a device intended to execute the resource and/or the recipient user of the resource. In examples, the identifier may be an IP address for recipient device 110, an email address associated with the second user, an account identifier associated with the second user, or other identifying information for the second user (e.g., a phone number, an address, etc.). Upon receiving target identification information, flow proceeds to operation 504 where a target datastore is queried to determine known device characteristics and/or user customization preferences for the target device and/or user. The target device and/or user may have previously received a resource from resource provider 202. In such examples, the resource provider 202 may have stored device settings, user profile information, and/or previously selected customizations associated with the target device and/or user that can be used to set or otherwise configure the customizable features of the selected resource. In some instances, a determination is made as to whether the target device and/or user previously received a resource that is the same type as the currently selected resource being customized. In said instances, the type similarity of the prior resource may be used to determine configuration and/or customization settings for the selected resource. At operation 506, the known configuration and/or customization settings are used to automatically configure the one or more selected resources.

At decision operation 508, a determination is made as to whether all of the configurable or customizable features have been configured. In one example, only features indicated as required by the resource metadata may be evaluated to determine completion at operation 508. Alternatively, all configurable features may be evaluated to determine whether the resource has been fully configured or customized. If all required (or all settable features) have been configured, flow branches YES to operation 514 discussed below. Otherwise, flow branches NO to operation 510.

At operation 510, a query is generated and sent to the target device. The target device may be a device intended to receive and execute the target resource, a device indicated by the identification information received at operation 502, or a device associated with the intended recipient user. The device performing the method 500 may automatically generate and send a query to the target device for one or more specific customizable features. In one example, the query may request device specific information from the target device. Alternatively, the query may be intended for the target user. In such instances, the query may take the form of an email or other electronic communication directed towards the target user that prompts the user to provide a selection of the unknown customizable features. At operation 512, a response to the query is received. The response contains configuration or customization settings required to complete configuration of the resource. At operation 514, the resource is automatically configured based upon the received settings.

Returning now to FIG. 4, upon automatically determining the customization settings, flow continues to decision operation 410 where a determination is made as to whether the device performing the method 400 received information related to all, or at least all required, configuration settings. If not, flow branches NO and returns to operation 408 where the automatic determination process is repeated until the configuration and/or customization settings are determined. Otherwise, flow branches YES to operation 412 where the one or more selected resources are automatically configured and/or customized based upon the target device environment and/or the target user's customization preferences. At operation 414, the configured resources is provided to the target device and/or user. In examples where the selected resource is an electronic resource, providing the resource includes sending the resource to the target device via a network, such as over the Internet or an enterprise intranet. In alternate aspects, the resource may be a physical article. In such cases, resource provider may issue an order to deliver the configured and customized physical article to the intended recipient.

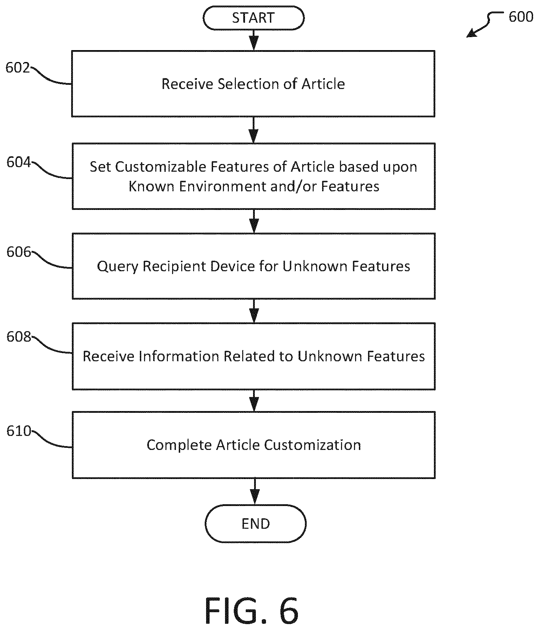

While aspects of the present disclosure have so far have generally been described with respect to configuring an electronic resource, FIG. 6 provides an exemplary method 600 of a practical application of the automatic configuration aspects disclosed herein to an electronic marketplace. For example, a user of an electronic marketplace may purchase an item on behalf of another user. In some instances, the user purchasing the item may not be familiar with product specifications that would best suit the recipient. In some instances, the user may not be able to receive specifications from the intended recipient. For example, the recipient may not be sophisticated enough to determine their own hardware requirements. Alternatively, the purchasing user may not want to ask the recipient for product specific information. For example, the purchase may be a gift and the purchaser may not want to ask the recipient in order to avoid spoiling a surprise.

In one example, the method 600 may be performed by an electronic marketplace. A general order of the operations for the method 600 is shown in FIG. 6. The method 600 may include more or fewer steps or may arrange the order of the steps differently than those shown in FIG. 6. The method 600 can be executed as a set of computer-executable instructions executed by a computer system and encoded or stored on a computer readable medium. Further, the method 600 can be performed by gates or circuits associated with a processor, an ASIC, an FPGA, a SOC or other hardware device. Hereinafter, the method 300 shall be explained with reference to the systems, components, devices, modules, software, data structures, data characteristic representations, signalling diagrams, methods, etc., described in conjunction with FIGS. 1, 2, 3, 5, and 7. Flow begins at operation 602, where the electronic marketplace receives a selection of an article or product. As discussed, the selection may be received from a user purchasing the article or product for another user.

At operation 604, the electronic marketplace determines that the selected article or product contains one or more configurable or customizable features. The determination may be made based upon analysis of metadata associated with the selected article or product. At operation 604, the electronic marketplace may automatically determine settings for the configurable or customizable features based upon past purchase history of the intended recipient. For example, if the product is a shirt, the electronic marketplace may determine a shirt size for the recipient based upon the recipient's purchase history. In general, it is often the case where the intended recipient did not purchase the same exact product

At operation 606, for configurable or customizable features that cannot be determined based upon prior purchase history, the electronic marketplace may automatically generate a communication to the intended recipient prompting the intended recipient to select the customizable features. The communication may be an email with a link to the product page asking the recipient to select product features. Alternatively, in order to maintain a surprise, email may generally ask information from the intended recipient related to the product without actually identifying the product. The query may be in the form of an electronic communication sent via email, over an instant messaging application, via text message, via a social network, etc. At operation 608, configurable or customizable settings are received in response to the query and used to configure the product according to the recipient's specifications. The received settings are used to configure the product at operation 610. Once the product is configured, e.g., the correct product is selected based upon the recipient's configurations, the product may be ordered and delivered to the recipient.

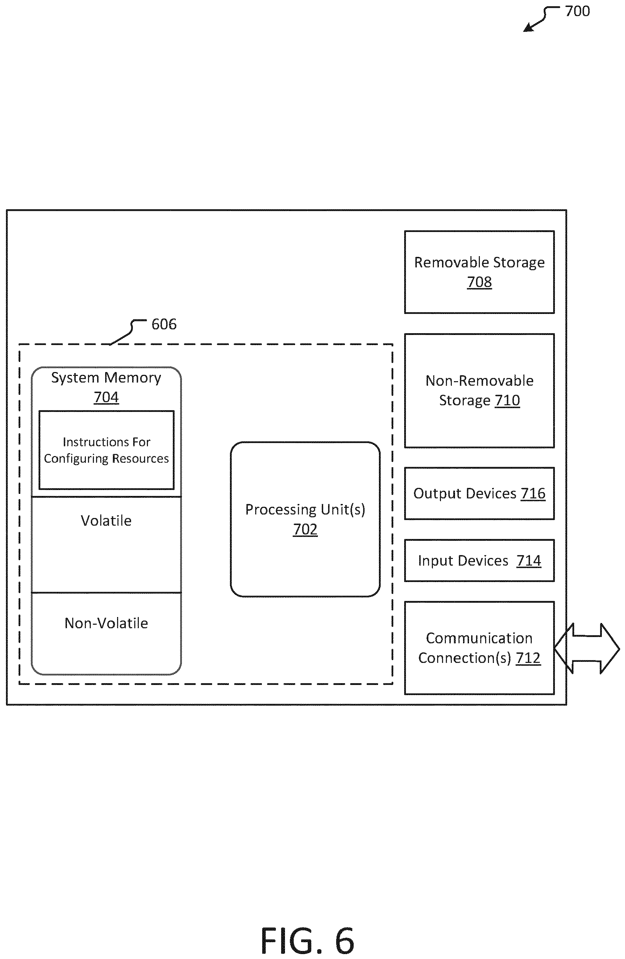

FIG. 7 illustrates a simplified block diagram of the device with which aspects of the present disclosure may be practiced in accordance with aspects of the present disclosure. One or more of the present embodiments may be implemented in an operating environment 700. This is only one example of a suitable operating environment and is not intended to suggest any limitation as to the scope of use or functionality. Other well-known computing systems, environments, and/or configurations that may be suitable for use include, but are not limited to, personal computers, server computers, hand-held or laptop devices, multiprocessor systems, microprocessor-based systems, programmable consumer electronics such as smartphones, network PCs, minicomputers, mainframe computers, distributed computing environments that include any of the above systems or devices, and the like.

In its most basic configuration, the operating environment 700 typically includes at least one processing unit 702 and memory 704. Depending on the exact configuration and type of computing device, memory 704 (instructions to perform automatic customizations as described herein) may be volatile (such as RAM), non-volatile (such as ROM, flash memory, etc.), or some combination of the two. This most basic configuration is illustrated in FIG. 7 by dashed line 706. Further, the operating environment 700 may also include storage devices (removable, 708, and/or non-removable, 710) including, but not limited to, magnetic or optical disks or tape. Similarly, the operating environment 700 may also have input device(s) 714 such as keyboard, mouse, pen, voice input, on-board sensors, etc. and/or output device(s) 716 such as a display, speakers, printer, motors, etc. Also included in the environment may be one or more communication connections, 712, such as LAN, WAN, a near-field communications network, point to point, etc.

Operating environment 700 typically includes at least some form of computer readable media. Computer readable media can be any available media that can be accessed by at least one processing unit 702 or other devices comprising the operating environment. By way of example, and not limitation, computer readable media may comprise computer storage media and communication media. Computer storage media includes volatile and non-volatile, removable and non-removable media implemented in any method or technology for storage of information such as computer readable instructions, data structures, program modules or other data. Computer storage media includes, RAM, ROM, EEPROM, flash memory or other memory technology, CD- ROM, digital versatile disks (DVD) or other optical storage, magnetic cassettes, magnetic tape, magnetic disk storage or other magnetic storage devices, or any other tangible, non-transitory medium which can be used to store the desired information. Computer storage media does not include communication media. Computer storage media does not include a carrier wave or other propagated or modulated data signal.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

The operating environment 700 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in offices, enterprise- wide computer networks, intranets and the Internet.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, for example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the scope of the broader aspects of the general inventive concept embodied in this application that do not depart from the broader scope of the claimed disclosure as defined in the appended claims.

## Claims

1. A method comprising:
receiving, from a first computing device associated with a first user, a request for a resource on behalf of a second user;
determining that the resource comprises one or more user configurable features, wherein the determination is based at least upon metadata associated with the resource;
in response to determining that the resource comprises one or more configurable features, automatically determining one or more settings for the one or more configurable features, wherein the one or more settings are associated with the second user; and
providing the resource to the second user, wherein the one or more configurable features are configured in accordance with the one or more settings.

2. The method of claim 1, further comprising determining whether configuration settings for a subset of the one or more configurable features was received with the selection of the resource.

3. The method of claim 2, when configuration settings for the subset of the one or more configurable features was received, applying the configuration settings to the subset of the one or more configurable features.

4. The method of any one of claims 1 to 3, wherein automatically determining the one or more settings comprises determining the one or more settings based upon a history of prior user selections received from the second user, wherein the prior user selections are associated with a prior accessed resource having the same type as the resource.

5. The method of any one of claims 1 to 4, wherein automatically determining the one or more settings comprises determining the one or more settings based upon a target device for the second user.

6. The method of claim 5, wherein determining the one or more settings of the target device comprises determining hardware and software characteristics of the target device.

7. The method of claim 5, wherein determining the one or more settings of the target device comprises sending a request to the target device for device information.

8. The method of any one of claims 1 to 7, wherein automatically determining the one or more settings comprises:
sending an electronic communication to a second computing device associated with the second user, wherein the electronic communications communicate the one or more configurable features of the resource; and
in response to sending the electronic communication, receiving settings information related to the one or more configurable features from the second computing device.

9. The method of claim 8, wherein the electronic communication is an email.

10. The method of any one of claims 1 to 9, wherein the resource is an item for sale on an electronic marketplace, and wherein the one or more configurable features relate to characteristics of the item for sale.

11. The method of claim 10, wherein the one or more characteristics comprise at least one of: a size; a color; a shape; a version; a brand; or a material.

12. A system comprising:
at least one processor; and
memory encoding computer executable instructions that, when executed by the at least one processor, cause the at least one processor to carry out the method of any one of claims 1 to1 1.

13. A computer-readable medium encoding instructions that, when executed by at least one processor, cause the at least one processor to carry out the method of any one of claims 1 to 11.
